# EUROPÄISCHE PATENTSCHRIFT

(11) **EP 2 711 542 B1**
(45) Veröffentlichungstag und Bekanntmachung des Hinweises auf die Patenterteilung: **27.03.2019**
(21) Anmeldenummer: 13184345.0
(22) Anmeldetag: 13.09.2013
(51) Int. Cl.: F03D 1/06, F03D 7/02

(54) **Rotorblatt mit Dämpfungssystem**
Rotor blade comprising a damping system
Pale de rotor avec système d'amortissement

(30) Priorität: 19.09.2012 DE 102012216804
(43) Veröffentlichungstag der Anmeldung: 26.03.2014
(73) Patentinhaber: Senvion GmbH, 22297 Hamburg (DE)
(72) Erfinder: Erbslöh, Sascha, Dr., 22419 Hamburg (DE)
(74) Vertreter: Wallinger Ricker Schlotter Tostmann

(56) Entgegenhaltungen:
- EP-A1- 1 623 111
- WO-A1-97/01709
- AU-A1- 2009 346 320
- DE-A1- 4 131 615
- DE-A1- 10 230 290
- US-A1- 2010 239 426
- US-A1- 2012 141 274

## Beschreibung

Die Erfindung betrifft ein Dämpfungssystem für ein Rotorblatt einer Windenergieanlage sowie ein Rotorblatt.

Im Zuge der Steigerung der Maximalleistung moderner Windenergieanlagen geht der Trend hin zu immer größeren und insbesondere längeren Rotorblättern. Diese Entwicklung wird nicht zuletzt unterstützt durch das Interesse an der effizienten Ausnutzung von Windenergie auf See durch so genannte Offshore-Windparks.

Mit steigender Länge der Rotorblätter wachsen auch die Anforderungen an die Strukturstabilität, um die im Betrieb der einseitig eingespannten Rotorblätter auftretenden Kräfte abzufangen. Problematisch sind dabei insbesondere Windböen, die zu einer plötzlichen Änderung des effektiven Anströmwinkels und somit zu wechselnden Auftriebskräften führen. Problematisch können auch eine partielle Abschattung durch einen Nachlauf sein, Sturmlastfälle bei trudelndem Rotor und ein bei Vollastbetrieb bei hohen Windgeschwindigkeiten stark gepitschtes Rotorblatt bei einer geringen Dämpfung durch einen negativen Anstellwinkel und Stall im äußeren Bereich des Rotorblattes. Dadurch werden Rotorblattschwingungen quer zur Profilsehne des Rotorblattes (flapwise) und parallel zur Profilsehne des Rotorblattes (edgewise) angeregt, die zu erheblichen Spitzenbelastungen der Rotorblattstruktur führen und langfristig Stabilitätsprobleme durch Materialermüdung verursachen können.

Zur Verringerung derartiger kritischer Lastfälle wird derzeit eine Vielzahl von aktiven Klappensystemen grundlegend untersucht, mittels derer die Aerodynamik des Rotorblattes an die wechselhaften Windbedingungen angepasst werden soll. Diese Klappensysteme umfassen in der Regel Sensoren, beispielsweise zum Messen des Profilanstellwinkels, sowie mechanische oder pneumatische Aktuatoren für die Klappen, die über einen geschlossenen Regelkreis unter Verwendung der Sensordaten angesteuert werden. Entsprechend weisen alle derzeit untersuchten Konzepte eine erhebliche Komplexität auf und stellen große Herausforderungen an die Systemimplementierung und die Verfügbarkeit im Betrieb.

Ausgehend von diesem Stand der Technik liegt der vorliegenden Erfindung die Aufgabe zugrunde, eine alternative Lösung zur Verringerung von Spitzenbelastungen für Rotorblätter einer Windenergieanlage anzugeben, die insbesondere langlebig, zuverlässig und strukturell einfach sein soll.

WO 97/01709 A1 offenbart ein Rotorblatt einer Windkraftanlage mit einer verschwenkbaren Blatthinterkante bzw. verschwenkbaren Klappen.

DE 102 30 290 A1 offenbart einen Flügel für eine Windkraftanlage mit einem Vibrationsdämpfer, bei dem eine verschwenkbare Rotorblatthinterkante vorgesehen ist.

EP 1 623 111 A1 offenbart ein Rotorblatt einer Windkraftanlage, bei der durch flexible Klappen auftriebsverändernde Mittel vorgesehen sind. Die flexiblen Klappen werden durch Aktivierungsmittel eingestellt. Es findet hierbei eine aktive Verstellung der Klappen statt.

US 2012/0141274 A1 offenbart ein Rotorblatt einer Windkraftanlage mit einem verschwenkbaren Blatthinterkantenbereich.

Diese Aufgabe wird gelöst durch ein Rotorblatt gemäß Anspruch 1.

Das Dämpfungssystem des erfindungsgemäßen Rotorblattes zeichnet sich insbesondere dadurch aus, dass mittels der Trägheitsmasse unmittelbar auf eine Beschleunigung des Rotorblattes eine Änderung der aerodynamischen Eigenschaften des Rotorblattes erfolgt und dadurch die beschleunigte Bewegung aerodynamisch gebremst wird. Auf diese Weise werden insbesondere Schwingungen gedämpft und Spitzenbelastungen für die Struktur des Rotorblattes vermieden.

Es ist insbesondere ein Vorteil der Erfindung, dass die Trägheitsmasse und somit die Kontrollfläche unmittelbar auf die Bewegung des Rotorblattes ansprechen, ohne dass es aufwändiger Steuer- oder Regelsysteme bedarf.

Erfindungsgemäß ist die Kontrollfläche dazu ausgebildet, die Aerodynamik eines Rotorblattes einer Windenergieanlage zu ändern oder zu beeinflussen. Darunter wird insbesondere verstanden, dass die Kontrollfläche bei bestimmungsgemäßem Einsatz mit einem Rotorblatt einen Auftriebsbeiwert des Rotorblattes und/oder einen Widerstandsbeiwert des Rotorblattes beeinflusst oder ändert.

Die Kontrollfläche kann als schwenkbare Klappe zur Anordnung an einer Oberfläche des Rotorblattes ausgebildet sein. Hierbei wird die Kontrollfläche insbesondere aufgrund einer bei einer Beschleunigung des Rotorblattes auf die Trägheitsmasse wirkende Trägheitskraft verschwenkt, so dass insbesondere ein das Rotorblatt umströmender Luftstrom durch die Kontrollfläche abgelenkt oder unterbrochen wird. Unter einem Bewegen der Kontrollfläche wird insbesondere ein Verschwenken verstanden.

Bei der Erfindung ist die Kontrollfläche als formvariabler Flächenabschnitt für eine äußere Oberfläche oder einer äußeren Oberfläche des Rotorblattes ausgebildet. Hierbei ist die Kontrollfläche insbesondere als Teil der Rotorblattoberfläche in das Rotorblatt integrierbar, wobei erfindungsgemäß die Form der Kontrollfläche mittels einer bei Beschleunigung des Rotorblattes auf die Trägheitsmasse wirkende Trägheitskraft verformt wird, so dass ein aerodynamisches Profil des Rotorblattes beeinflusst oder verändert wird.

Diese Ausführungen einer Kontrollfläche eines Dämpfungssystems zeichnen sich vorteilhafterweise durch eine einfache mechanische Konstruktion ohne aktive Komponenten wie Motoren, Stellglieder oder sonstige Aktuatoren aus.

Eine bevorzugte Ausführungsform der Erfindung zeichnet sich dadurch aus, dass die Trägheitsmasse über einen drehbar am Rotorblatt lagerbaren Hebel mit der Kontrollfläche verbunden ist. In dem Fall, dass die Kontrollfläche als schwenkbare Klappe ausgebildet ist, entspricht die Drehachse des Hebels beispielsweise einem Schwenklager der Klappe.

Darüber hinaus eröffnet diese bevorzugte Ausgestaltung der Erfindung vielfältige Anpassungsmöglichkeiten des Dämpfungssystems an die konkreten Erfordernisse der jeweiligen Implementierung.

Insbesondere bestimmt die relative Lage eines Massenschwerpunktes der Trägheitsmasse zu einer Drehachse des Hebels die Richtungsempfindlichkeit des erfindungsgemäßen Dämpfungssystems, wobei bei einer Beschleunigung des Rotorblattes entlang der Verbindungslinie zwischen Massenschwerpunkt der Trägheitsmasse und Drehachse keinerlei Trägheitskräfte auf die Kontrollfläche übertragen werden und somit keine Betätigung der Kontrollfläche erfolgt. Bei einer Beschleunigung des Rotorblattes quer zur Verbindungslinie zwischen Massenschwerpunkt der Trägheitsmasse und Drehachse des Hebels hingegen wird ein maximaler Anteil der Trägheitskraft auf die Kontrollfläche übertragen und die Kontrollfläche somit mit maximaler Kraft betätigt.

Des Weiteren erlaubt ein Vorgeben der Länge des Hebels bzw. des Abstands zwischen Massenschwerpunkt der Trägheitsmasse und Drehachse des Hebels, das Verhältnis der zur Betätigung der Kontrollfläche zur Verfügung stehenden Kraft relativ zu der auf die Trägheitsmasse wirkenden Trägheitskraft anzupassen.

Das Dämpfungssystem des erfindungsgemäßen Rotorblattes umfasst eine Spannvorrichtung zur Erzeugung einer vorgebbaren Vorspannung für die Kontrollfläche und/oder die Trägheitsmasse, so dass die Kontrollfläche erst bei einer Beschleunigung des Rotorblattes, die größer als eine durch die Vorspannung bestimmte Minimalbeschleunigung ist, betätigt wird.

Hierdurch wird vorteilhafterweise erreicht, dass das Dämpfungssystem bei geringen, unkritischen Beschleunigungen bzw. Bewegungen mit geringen und unkritischen Beschleunigungswerten die Aerodynamik des Rotorblattes unverändert lässt. Das Dämpfungssystem wirkt sich im Normalbetrieb daher nicht ertragsmindernd aus, weil die, in der Regel auf maximalen Ertrag ausgelegte, Aerodynamik des Rotorblattes nicht beeinflusst wird. Erst bei hohen Beschleunigungen des Rotorblattes und entsprechend hohen auf die Trägheitsmasse wirkenden Trägheitskräften, die insbesondere eine hohe strukturelle Belastung des Rotorblattes bedeuten, wird die von der Vorspannvorrichtung erzeugte Vorspannung überwunden, so dass die Kontrollfläche des Dämpfungssystems betätigt wird.

Das Dämpfungssystem ist vorzugsweise im nabenfernen Bereich des Rotorblattes, insbesondere im spitzenseitigen Drittel des Rotorblattes, angeordnet.

In diesem Bereich des Rotorblattes treten die größten lastinduzierten Beschleunigungen auf. Gleichzeitig hat dieser Bereich des Rotorblattes aufgrund der Rotordrehung die höchste Geschwindigkeit, so dass bereits geringe Änderungen der aerodynamischen Eigenschaften des Rotorblattes einen großen Einfluss auf das Auftriebsverhalten des Rotorblattes haben und somit bereits mit relativ kleinen Bewegungen oder Formveränderungen der Kontrollfläche eine erfolgreiche Dämpfung von Spitzenbeschleunigungen bzw. zur Vermeidung von Spitzenlasten gewährleistet ist.

Die Trägheitsmasse des Dämpfungssystems ist vorzugsweise in einem Innenhohlraum des Rotorblattes angeordnet. Unter Innenhohlraum wird im Rahmen der Erfindung insbesondere das Innere des hohlen Rotorblattes verstanden.

Bei dieser Anordnung ist die Trägheitsmasse selbst einer das Rotorblatt umströmenden Luftströmung nicht ausgesetzt und hat daher keinerlei negativen Einfluss auf die Aerodynamik des Rotorblattes.

Bei einer bevorzugten Ausgestaltung der Erfindung ist die Kontrollfläche des Dämpfungssystems an einer Saugseite des Rotorblattes angeordnet, wobei das Dämpfungssystem derart ausgebildet ist, dass bei einer Beschleunigung des Rotorblattes in Richtung einer Drehbewegung des Rotorblattes um eine Nabe der Windenergieanlage mittels der Kontrollfläche des Dämpfungssystems ein Auftriebsbeiwert des Rotorblattes verringert wird.

Wenn hier im Folgenden von einer Richtung der Beschleunigung gesprochen wird, so ist darunter im Rahmen der Erfindung insbesondere zu verstehen, dass eine vektorielle Gesamtbeschleunigung des Rotorblattes zumindest eine Komponente in der angegebenen Richtung aufweist.

Eine Beschleunigung des Rotorblattes in Richtung einer Drehbewegung des Rotorblattes um eine Nabe der Windenergieanlage tritt beispielsweise bei einer beschleunigten Drehbewegung oder bei einem Schlagen oder Schwingen des Rotorblattes in der Drehebene, einer sogenannten Flapwise-Schwingung des Rotorblattes, auf. Eine vollständige Schwingungsphase einer Flapwise-Schwingung unterteilt sich dabei in eine erste Hälfte, in der das Rotorblatt mit seiner Drehbewegung beschleunigt wird, und eine zweite Hälfte, in der das Rotorblatt entgegen seiner Drehbewegung beschleunigt wird. Die Flapwise-Schwingung ist insbesondere dann in der Drehebene des Rotors, wenn das Rotorblatt wenigstens teilweise aus dem Wind gedreht ist, also insbesondere bei Nennlastbetrieb der Windenergieanlage.

Die Reduzierung des Auftriebsbeiwertes entspricht hierbei insbesondere einer effektiven Kraft entgegen der Drehrichtung des Rotorblattes, so dass die beschleunigte Bewegung oder Schwingung in Richtung der Drehrichtung abgebremst oder gedämpft wird.

Bei einer weiteren bevorzugten Ausführung der Erfindung ist die Kontrollfläche des Dämpfungssystems an einer Druckseite des Rotorblattes angeordnet, wobei das Dämpfungssystem derart ausgebildet ist, dass bei einer Beschleunigung des Rotorblattes entgegen einer Drehbewegung des Rotorblattes um eine Nabe der Windenergieanlage mittels der Kontrollfläche des Dämpfungssystems ein Auftriebsbeiwert des Rotorblattes erhöht wird.

Die Wirkung entspricht hier mutatis mutandis der zuvor beschriebenen Dämpfung von Flapwise-Bewegungen mit dem Unterschied, dass die Dämpfung während einer Beschleunigung des Rotorblattes gegen die Drehrichtung des Rotors erfolgt. Eine derartige Beschleunigung tritt beispielsweise bei einer Reduzierung der Drehzahl oder bei Flapwise-Schwingungen während der zweiten Hälfte einer Schwingungsphase auf.

Besonders bevorzugt ist, wenn das Rotorblatt ein erstes Dämpfungssystem mit einer an einer Saugseite des Rotorblattes angeordneten Kontrollfläche und ein zweites Dämpfungssystem mit einer an einer Druckseite des Rotorblattes angeordneten Kontrollfläche aufweist.

Hierdurch wird beispielsweise ermöglicht, dass eine Flapwise-Schwingung sowohl während der ersten Hälfte als auch während der zweiten Hälfte einer Schwingungsphase gedämpft wird.

Wenn das Dämpfungssystem derart ausgebildet ist, dass bei einer Beschleunigung des Rotorblattes entlang einer Profilsehne des Rotorblattes, insbesondere in Richtung zu einer Profilnase hin, ein Widerstandsbeiwert des Rotorblattes mittels der Kontrollfläche des Dämpfungssystems erhöht wird, ist darüber hinaus auch die wirksame Dämpfung von Schwingungen des Rotorblattes parallel zur Profilsehne, so genannten Edgewise-Schwingungen, ermöglicht. Da in dieser Richtung jedoch keine nennenswerten Auftriebskräfte wirken, deren Änderung zur Dämpfung beitragen könnte, erfolgt die Dämpfung hierbei in erster Linie durch Erhöhung des aerodynamischen Widerstandes oder des Widerstandsbeiwertes des Rotorblattes.

Bei einer weiteren Ausführungsform der Erfindung ist die Kontrollfläche des Dämpfungssystems an einer Hinterkante des Rotorblattes angeordnet, wobei das Dämpfungssystem derart ausgebildet ist, dass bei einer Beschleunigung des Rotorblattes in Richtung einer Drehbewegung des Rotorblattes um eine Nabe der Windenergieanlage mittels der Kontrollfläche des Dämpfungssystems ein Auftriebsbeiwert des Rotorblattes verringert wird und dass bei einer Beschleunigung des Rotorblattes entgegen einer Drehbewegung des Rotorblattes um eine Nabe der Windenergieanlage mittels der Kontrollfläche des Dämpfungssystems ein Auftriebsbeiwert des Rotorblattes erhöht wird.

Die Kontrollfläche kann beispielsweise wie ein Querruder bei Flugzeugtragflügeln als schwenkbar gelagerte Hinterkante des Rotorblattes ausgebildet sein. Die Kontrollfläche kann nach Art einer Landeklappe als verschiebbare Hinterkante ausgebildet sein.

Eine weitere bevorzugte Ausführungsform ist dadurch gekennzeichnet, dass das Rotorblatt eine, insbesondere flexible, Hinterkante des Rotorblattes aufweist, die als Kontrollfläche des Dämpfungssystems ausgebildet ist. Bei dieser Ausführungsform, bei der die Kontrollfläche insbesondere durch eine Verformung der Kontrollfläche betätigt wird, ist das Dämpfungssystem beispielsweise ein integraler Bestandteil des Rotorblattes.

Weitere Merkmale der Erfindung werden aus der Beschreibung erfindungsgemäßer Ausführungsformen zusammen mit den Ansprüchen und den beigefügten Zeichnungen ersichtlich.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch ein erfindungsgemäßes Rotorblatt für eine Windenergieanlage;
- Fig. 2: schematisch eine Schnittdarstellung eines Rotorblattes aus Fig. 1 entlang der Linie A-A, wobei eine nicht zur Erfindung gehörende Ausführungsform einer Störklappe dargestellt ist;
- Fig. 3a und 3b: schematisch die Funktionsweise des Dämpfungssystems aus Fig. 2;
- Fig. 4: eine weitere Konfiguration eines Dämpfungssystems;
- Fig. 5: schematisch eine weitere Konfiguration eines Dämpfungssystems;
- Fig. 6: schematisch ein Dämpfungssystem, das als integraler Bestandteil eines erfindungsgemäßen Rotorblattes ausgebildet ist;
- Fig. 7: schematisch eine weitere Ausführungsform eines Dämpfungssystems
- Fig. 8: schematisch ein weiteres Dämpfungssystem, das als integraler Bestandteil eines erfindungsgemäßen Rotorblattes ausgebildet ist,
- Fig. 9: schematisch einen Ausschnitt eines weiteren Dämpfungssystems,
- Fig. 10: schematisch in einer Schnittdarstellung eine weitere Ausführungsform eines Dämpfungssystems und
- Fig. 11: eine schematische Schnittdarstellung durch noch ein weiteres Dämpfungssystem.

In den Zeichnungen sind jeweils gleiche oder gleichartige Elemente und/oder Teile mit denselben Bezugsziffern versehen, so dass von einer erneuten Vorstellung jeweils abgesehen wird.

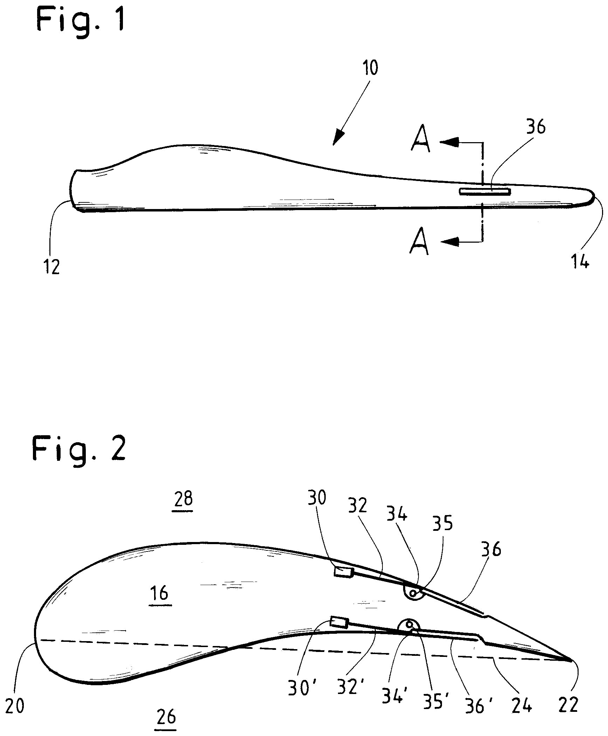

Fig. 1 zeigt schematisch ein erfindungsgemäßes Rotorblatt 10. Das Rotorblatt 10 hat eine Blattwurzel 12 zur Verbindung mit einem Rotor einer nicht dargestellten Windenergieanlage und erstreckt sich von der Blattwurzel 12 bis zur Blattspitze 14. Im nabenfernen Bereich, beispielsweise im spitzenseitigen Drittel seiner Längserstreckung, weist das Rotorblatt 10 eine erfindungsgemäße Dämpfungsvorrichtung mit einer als Störklappe 36 ausgebildeten Kontrollfläche auf.

Fig. 2 zeigt schematisch eine Schnittdarstellung des in Fig. 1 dargestellten Rotorblattes 10 entlang der Linie A-A, d.h. in Höhe des Dämpfungssystems, wobei eine nicht zur Erfindung gehörende Ausführungsform einer Störklappe dargestellt ist.

Das Rotorblatt 10 weist hier im Querschnitt ein aerodynamisches Profil mit einer Profilnase 20 und einer Hinterkante 22 auf. Die Profilsehne 24, d.h. die direkte Verbindung von Profilnase 20 zur Hinterkante 22, ist in Fig. 2 als gestrichelte Linie dargestellt. Das aerodynamische Profil umschließt einen Innenraum 16, der im Wesentlichen hohl ausgebildet ist. Gegebenenfalls vorhandene Strukturen in dem Innenraum 16, beispielsweise Versteifungen, Rohre oder Kabel, sind in Fig. 2 nicht dargestellt.

Das Profil des Rotorblattes 10 weist eine Druckseite 26 sowie eine Saugseite 28 auf.

Das in Fig. 2 dargestellte Rotorblatt weist an der Druckseite 26 und der Saugseite 28 jeweils ein Dämpfungssystem mit einer Störklappe 36, 36' auf, die jeweils in bzw. an der äußeren Oberfläche des Rotorblattes 10 angeordnet ist und um eine Drehachse 34, 34' drehbar gelagert ist. Über jeweils einen Hebelarm 32, 32' sind Störklappen 36, 36' jeweils mit einer Trägheitsmasse 30, 30' verbunden, wobei die Trägheitsmassen 30, 30' im hohlen Innenraum 16 des Rotorblattes 10 angeordnet sind.

Die Störklappen 36, 36', die in der Avionik auch als Spoiler (von englisch: to spoil, stören) bekannt sind, haben dabei die Wirkung, dass bei Auslenkung der Störklappen 36, 36' um die jeweilige Drehachse 34, 34' ein das Rotorblattprofil umströmender Luftstrom abgelenkt wird.

Bei kleiner Auslenkung einer Störklappe 36, 36' bleibt eine laminare Strömung um das Rotorblatt 10 erhalten, während es bei größerer Auslenkung der Störklappen 36, 36' zu einem Abreißen der laminaren Strömung und einer Verwirbelung hinter den Störklappen 36, 36' kommt. Dadurch wird jeweils der Auftriebsbeiwert des Rotorblattes 10 bzw. des aerodynamischen Profils des Rotorblattes 10 bei Auslenkung der Störklappe 36' an der Druckseite 26 erhöht und bei Auslenkung der Störklappe 36 an der Saugseite 28 verringert.

Die Störklappen 36, 36' sind an ihrer jeweiligen Drehachse 34, 34' mittels einer schematisch als Spirale dargestellten Feder 35, 35' vorgespannt, so dass die Störklappen 36, 36' grundsätzlich eng an dem Rotorblatt 10 anliegen und der Auftriebsbeiwert des aerodynamischen Profils des Rotorblattes 10 durch die Störklappen 36, 36' nicht beeinflusst wird.

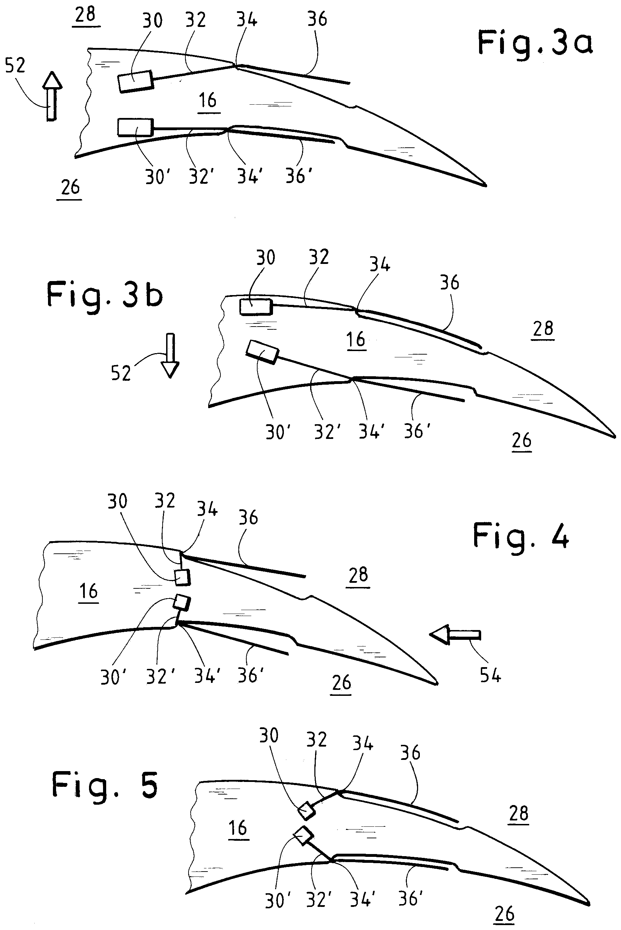

Bei einer Beschleunigung des Rotorblattes 10 in Richtung der Saugseite, dargestellt durch den Pfeil 52 in Fig. 3a, wird die Störklappe 36 an der Saugseite 28 des Rotorblattprofils aufgrund der Massenträgheit der mit dieser Störklappe 36 verbundenen Trägheitsmasse 30 ausgelenkt und der Auftriebsbeiwert des Rotorblattes entsprechend verringert. Dadurch ergibt sich eine effektive Kraft, die der Beschleunigung 52 entgegenwirkt. Die Störklappe 36' an der Druckseite 26 hingegen liegt weiterhin an dem Rotorblatt 10 an und beeinflusst den Auftriebsbeiwert nicht.

Bei einer Beschleunigung des Rotorblattes 10 in entgegengesetzter Richtung, dargestellt als Pfeil 52 in Fig. 3b, wird hingegen die Störklappe 36' an der Druckseite 26 des Rotorblattes 10 ausgelenkt, so dass der Auftriebsbeiwert erhöht wird. Auch hierdurch ergibt sich eine der Beschleunigung 52 entgegen wirkende effektive Kraft. In diesem Fall wird die Störklappe 36 an der Saugseite 28 des Rotorblattes 10 nicht ausgelenkt.

Fig. 4 zeigt eine weitere Konfiguration der Dämpfungssysteme, bei der die Hebelarme 32, 32' gegenüber den Störklappen 36 in etwa rechtwinklig abgewinkelt sind. In dieser Konfiguration werden beide Störklappen 36, 36' gleichzeitig bei einer Beschleunigung des Rotorblattes parallel zur Profilsehne 24 in Richtung zur Profilnase 20 hin, dargestellt durch den Pfeil 54, ausgelenkt. Dadurch wird der Widerstandsbeiwert des Rotorblattes 10 erhöht, so dass durch erhöhten Luftwiderstand des Rotorblattes 10 wiederum eine der Beschleunigung 54 entgegen wirkende Kraft aerodynamisch induziert wird.

Eine besonders bevorzugte Konfiguration der Dämpfungssysteme ist in Fig. 5 dargestellt. Hierbei sind die Trägheitsmassen 30, 30' und die Hebelarme 32, 32' dermaßen gegenüber den Störklappen 36, 36' abgewinkelt, dass die Störklappen sowohl bei Beschleunigungen 52 quer zur Profilsehne 24 als auch bei Beschleunigungen 54 entlang der Profilsehne 24 wie beschrieben ausgelenkt werden und die entsprechenden beschleunigten Bewegungen gedämpft werden.

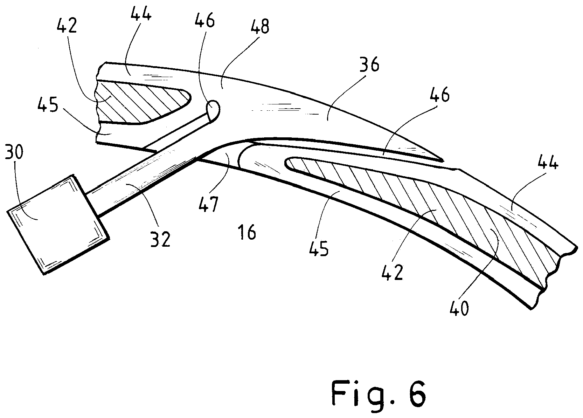

Die beschriebenen Störklappen 36, 36' können beispielsweise als separate Klappen ausgebildet sein, die mittels geeigneter Drehlager am Rotorblatt 10 befestigt werden. Die erfindungsgemäßen Störklappen 36, 36' sind als integrale Bestandteile des Rotorblattes 10 ausgebildet, wie beispielhaft in der Fig. 6 dargestellt ist.

Fig. 6 zeigt eine vergrößerte Schnittdarstellung in einer zu den Fig. 3a bis 5 vergleichbaren Schnittebene.

Die Außenhaut eines Rotorblattes 10 besteht typischerweise aus einer so genannten Rotorblattschale 40, die aus zahlreichen, teilweise faserverstärkten, Schichten aufgebaut ist. Üblich ist beispielsweise ein Aufbau als so genanntes Sandwichlaminat, bei dem ein Sandwichkern 42 beidseitig mit Schichten aus faserverstärktem Verbundwerkstoff beschichtet ist. Zur Ausbildung einer Störklappe 36 ist in die äußere Faserverbundschicht 44 ein Einschnitt 46 eingearbeitet, so dass eine Störklappe 36 als Bereich oder Teil der äußeren Faserverbundschicht 44 ausgebildet wird, der lediglich über einen Steg 48 mit dem eigentlichen Sandwichlaminat der Rotorblattschale 40 verbunden ist.

Aufgrund der Elastizität des Faserverbundmaterials ist die Störklappe 36 am Steg 48 schwenkbar, wobei der Steg 48 gleichzeitig eine federnde und vorspannende Wirkung hat.

Der Sandwichkern 42 sowie die zum Innenraum 16 des Rotorblattes 10 hin angeordnete Faserverbundschicht 45 weisen einen Durchbruch 47 auf, durch den ein Hebelarm 32 mit einer Trägheitsmasse 30 geführt wird. Der Hebelarm 32 besteht beispielsweise wie die Störklappe 36 aus Faserverbundmaterial und ist mit der Störklappe 36 verbunden. Insbesondere kann der Hebelarm 32 baulicher Bestandteil der Störklappe 36 sein. Beispielsweise sind die Rotorblattschale 40 oder die äußere Faserverbundschicht 44 der Rotorblattschale 40, die Störklappe 36 und der Hebelarm 32 integrale Bestandteile eines einzigen Faserverbundbauteils.

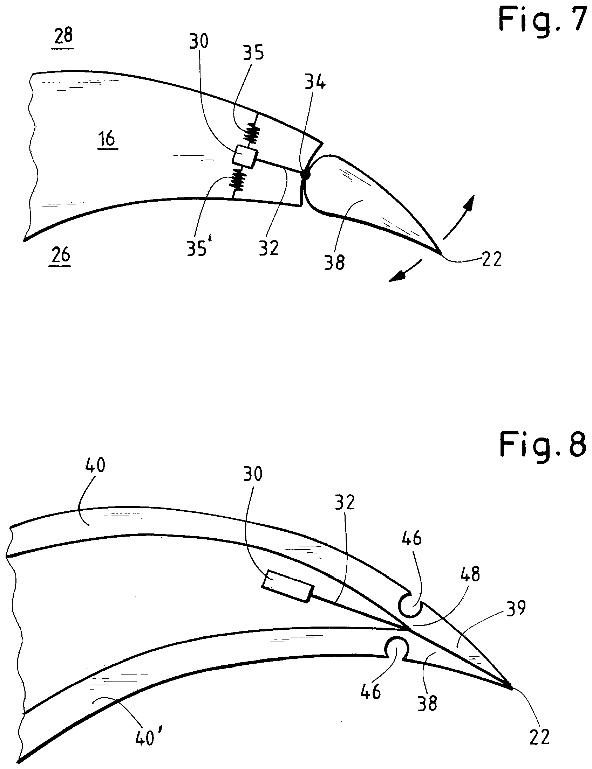

Fig. 7 zeigt eine weitere Ausführungsform eines Dämpfungssystems bzw. eines Rotorblattes 10 mit einem entsprechenden Dämpfungssystem.

Diese Ausführungsform umfasst eine als Hinterkantenklappe 38 ausgebildete Kontrollfläche, die entlang der in Fig. 7 dargestellten Pfeile um eine Drehachse 34 schwenkbar gelagert ist. Auch hier ist vorgesehen, dass die Hinterkantenklappe 38 über einen Hebelarm 32 mit einer Trägheitsmasse 30 verbunden ist, welche in einem Innenraum 16 des Rotorblattes 10 angeordnet ist. Die Trägheitsmasse 30 ist zur Erzeugung einer Vorspannung mittels zweier Federn 35 an der Innenseite des Rotorblattes 10 abgestützt. Die Funktionsweise der Hinterkantenklappe 38 ist vergleichbar mit den Störklappen 36, 36' gemäß Fig. 3a und 3b, wobei die Lösung gemäß Fig. 7 mit einer einzigen Kontrollfläche bzw. Kontrollvorrichtung auskommt. Allerdings wird hierbei die mechanische bzw. strukturelle Konstruktion des Rotorblattes im Bereich der Hinterkante komplizierter.

Auch eine bewegliche Hinterkantenklappe 38 lässt sich bei den üblicherweise verwendeten Konstruktionsverfahren als integraler Bestandteil eines Rotorblattes 10 ausbilden. Dies ist beispielhaft in Fig. 8 gezeigt.

Ein Rotorblatt 10 besteht beispielsweise aus zwei Rotorblattschalen 40, 40', die im Bereich der Hinterkante spitz zulaufen und flächig miteinander verklebt sind, so dass an der Hinterkante 22 des Rotorblattes 10 ein Klebebereich 39 der verklebten Rotorblattschalen 40, 40' ausgebildet ist.

Auf Höhe des Anfangs des Klebebereichs 39, d.h. der Punkt, an dem die Rotorblattschalen 40, 40' erstmals aneinander stoßen, sind an den Außenseiten der Rotorblattschalen 40, 40' jeweils Einschnitte 46 vorgesehen, so dass am Anfang des Klebebereichs 39 ein dünnerer und somit relativ flexibler Steg 48 ausgebildet ist, der ein Verschwenken des gesamten Klebebereichs 39 entlang der in Fig. 8 dargestellten Pfeile ermöglicht. Somit bildet der Klebebereich 39 eine schwenkbare Hinterkantenklappe 38 aus.

In den Klebebereich 39 bzw. die Hinterkantenklappe 38 ist ein Hebelarm 32 für eine Trägheitsmasse 30 eingearbeitet bzw. eingeklebt und/oder eingefasst, der ein erfindungsgemäßes Betätigen oder Verschwenken der Hinterkantenklappe 38 bei entsprechend auf das Rotorblatt wirkender Beschleunigung ermöglicht.

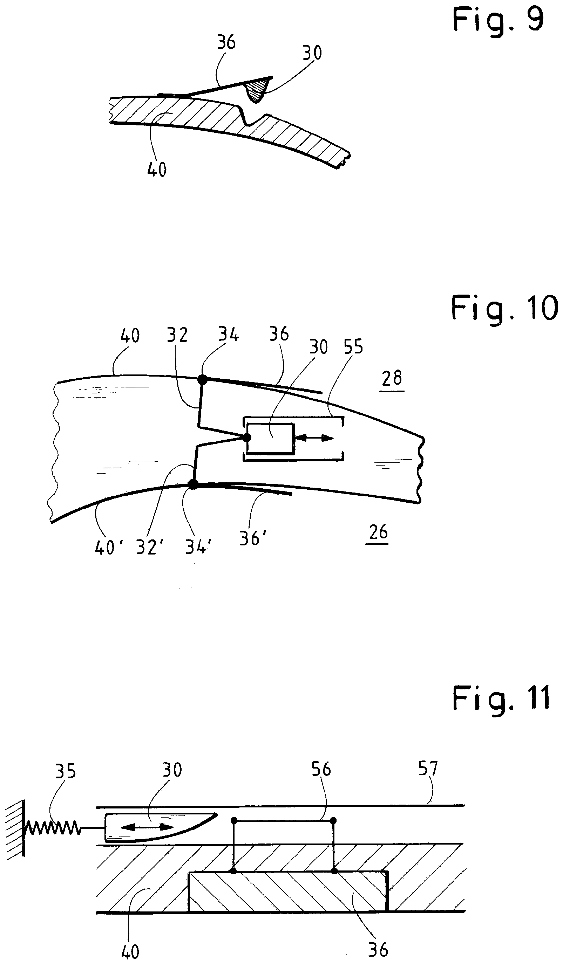

Fig. 9 zeigt schematisch einen Ausschnitt eines Rotorblatts, das eine nicht erfindungsgemäße Ausführungsform eines Dämpfungssystems aufweist. In die Rotorblattschale 40 ist ein entsprechendes Dämpfungssystem aufgenommen, dieses umfasst eine Störklappe 36, an deren äußerem Ende bzw. am Tip eine Trägheitsmasse 30 angeordnet ist. Die Störklappe 36 ist an deren anderem Ende mit der Rotorblattschale 40 verbunden, beispielsweise verklebt. Alternativ hierzu kann auch eine vorgespannte gelenkige Verbindung mit der Rotorblattschale 40 vorgesehen sein. In der Ausführungsform gemäß Fig. 9 ist die Störklappe 36 angrenzend an den Bereich, der mit der Rotorblattschale 40 verbunden ist, elastisch ausgebildet, und zwar mit einer strukturellen Vorspannung zu der Rotorblattschale 40 hin. Fig. 9 zeigt das Ausführungsbeispiel in einem Zustand, in dem aufgrund der Trägheit die Störklappe 36 ausgefahren ist.

Fig. 10 zeigt schematisch eine weitere Ausführungsform eines Dämpfungssystems in schematischer Darstellung. Dieses zeichnet sich dadurch aus, dass eine Trägheitsmasse 30 sich in einem Hohlzylinder 55 bewegt, und zwar aufgrund deren Trägheit bzw. von Fliehkräften. Die Bewegungsrichtung der Trägheitsmasse 30 in dem Hohlzylinder 55 ist durch den Doppelpfeil in Fig. 10 angedeutet. Die Trägheitsmasse ist mit zwei Hebelarmen 32 und 32' verbunden, die zum einen geknickt bzw. gebogen und mit einer Drehachse 34, 34' jeweils verbunden sind, an denen angelenkt die Störklappen 36 bzw. 36' sind. Für den Fall, dass sich die Trägheitsmasse 30 in Fig. 10 nach rechts bewegt, werden die Störklappen 36, 36' ausgefahren. Der Hohlzylinder 55 weist vorzugsweise an beiden Seiten bzw. zu beiden Enden hin Anstöße auf, an denen die Trägheitsmasse 30 anliegen kann, so dass die Weite der Bewegung der Trägheitsmasse 30 begrenzt werden kann.

Fig. 11 zeigt eine weitere schematische Darstellung eines Dämpfungssystems. In diesem Ausführungsbeispiel ist eine Trägheitsmasse 30 an einer Feder 35 angelenkt. Die Trägheitsmasse kann sich in der Doppelpfeilrichtung bewegen. Aufgrund der Trägheitsmasse 30, die sich in Fig. 11, beispielsweise bei einer entsprechenden Beschleunigung nach rechts bewegt, verdrängt eine Verdrängungshalterung 56, an der eine Störklappe 36 befestigt ist. Die Störklappe 36 ist in diesem Ausführungsbeispiel in der Rotorblattschalte 40 integriert. Diese kann allerdings auch auf der Rotorblattschale 40 aufliegen. In dem Ausführungsbeispiel gemäß Fig. 11 sorgt die Trägheitsmasse, die zur Verdrängungshalterung 56 hin eine gebogene bzw. konvexe Oberfläche aufweist, so dass je weiter die Trägheitsmasse 30 in Richtung der Verdrängungshalterung 56 gelangt, die Verdrängungshalterung 56 verdrängt wird, so dass je weiter die Trägheitsmasse 30 in Fig. 11 nach rechts, d.h. zur Verdrängungshalterung 56 gelangt, desto weiter wird die Störklappe 36 ausgelenkt. Je stärker die Trägheitsmasse wirkt, umso größer ist somit die Auslenkung. Die Stärke der Auslenkung der Störklappe 36 kann durch die Kontur der Trägheitsmasse 30 vorgegeben werden. Diese kann beispielsweise nicht konvex sein sondern linear. Auf diese Weise kann die Stärke des Effekts der Störklappe 36 eingestellt werden.

In dem Ausführungsbeispiel gemäß Fig. 11 ist die Trägheitsmasse 30 zwischen der Rotorblattschale 40 und einer nur schematisch angedeuteten Führungswand 57 geführt. Zudem kann anstelle einer linearen Bewegung der Störklappe 36 auch eine Kippbewegung vorgesehen sein. Hierzu kann beispielsweise die Verdrängungshalterung 56 nicht linear verschiebbar gestaltet sein, sondern kippbar gestaltet, so dass dann eine Störklappe 36, die in der Rotorblattschale 40 integriert ist oder auf dieser aufliegt, drehbar bewegbar ist.

### Bezugszeichenliste

- 10: Rotorblatt
- 12: Blattwurzel
- 14: Blattspitze
- 16: Innenraum
- 20: Profilnase
- 22: Hinterkante
- 24: Profilsehne
- 26: Druckseite
- 28: Saugseite
- 30, 30': Trägheitsmasse
- 32, 32': Hebelarm
- 34, 34': Drehachse
- 35, 35': Feder
- 36, 36': Störklappe
- 38: Hinterkantenklappe
- 39: Hinterkantenverklebung
- 40, 40': Rotorblattschale
- 42: Sandwichkern
- 44: äußere Faserverbundschicht
- 45: innere Faserverbundschicht
- 46: Einschnitt
- 47: Durchbruch
- 48: Steg
- 52: Beschleunigung (flapwise)
- 54: Beschleunigung (edgewise)
- 55: Hohlzylinder
- 56: Verdrändungshalterung
- 57: Führungswand

## Patentansprüche

1. Rotorblatt (10), für eine Windenergieanlage, mit einem Dämpfungssystem umfassend eine an einer äußeren Oberfläche in das Rotorblatt (10) integrierte Kontrollfläche (36, 36', 38) zum Ändern einer aerodynamischen Eigenschaft des Rotorblattes und eine mit der Kontrollfläche (36, 36', 38) verbundene Trägheitsmasse (30, 30'), so dass die Kontrollfläche (36, 36', 38) aufgrund einer bei einer Beschleunigung (52, 54) des Rotorblattes (10) auf die Trägheitsmasse (30, 30') wirkenden Trägheitskraft verformt wird, wobei das Dämpfungssystem eine Spannvorrichtung (48) zur Erzeugung einer vorgebbaren Vorspannung für die Kontrollfläche (36, 36', 38) und/oder die Trägheitsmasse (30, 30') aufweist, so dass die Kontrollfläche (36, 36', 38) erst bei einer Beschleunigung (52, 54) des Rotorblattes, die größer als eine durch die Vorspannung bestimmte Minimalbeschleunigung ist, betätigt wird, wobei in eine äußere Faserverbundschicht (44) einer Rotorblattschale (40) des Rotorblattes (10) ein Einschnitt (46) eingearbeitet ist, so dass die Kontrollfläche (36, 36', 38) als Bereich oder Teil der äußeren Faserverbundschicht ausgebildet wird, der über einen Steg (48) mit der Rotorblattschale (40) verbunden ist, wobei die Kontrollfläche (36, 36', 38) am Steg (48) schwenkbar ist und der Steg (48) die Vorspannung bewirkt, und wobei die Trägheitsmasse (30, 30') über einen drehbar am Rotorblatt (10) gelagerten Hebel (32, 32') mit der Kontrollfläche (36, 36', 38) verbunden und/oder in einem Innenhohlraum (16) des Rotorblattes (10) angeordnet ist.

2. Rotorblatt (10) nach Anspruch 1, **dadurch gekennzeichnet, dass** die Kontrollfläche (36, 36', 38) als formvariabler Flächenabschnitt einer äußeren Oberfläche des Rotorblattes (10) ausgebildet ist.

3. Rotorblatt (10) nach Anspruch 2, **dadurch gekennzeichnet, dass** die Kontrollfläche (36, 36', 38) als schwenkbare Klappe ausgebildet ist.

4. Rotorblatt (10) nach einem der vorangehenden Ansprüche, **dadurch gekennzeichnet, dass** das Dämpfungssystem im nabenfernen Bereich des Rotorblattes (10), insbesondere im spitzenseitigen Drittel des Rotorblattes (10), angeordnet ist.

5. Rotorblatt nach einem der vorangehenden Ansprüche, **dadurch gekennzeichnet, dass** die Kontrollfläche (36, 36', 38) des Dämpfungssystems an einer Saugseite (28) des Rotorblattes (10) angeordnet ist, wobei das Dämpfungssystem derart ausgebildet ist, dass bei einer Beschleunigung (52, 54) des Rotorblattes (10) in Richtung einer Drehbewegung des Rotorblattes (10) um eine Nabe der Windenergieanlage mittels der Kontrollfläche (36, 36', 38) des Dämpfungssystems ein Auftriebsbeiwert des Rotorblattes (10) verringert wird.

6. Rotorblatt (10) nach einem der Ansprüche 1 bis 4, **dadurch gekennzeichnet, dass** die Kontrollfläche (36, 36', 38) des Dämpfungssystems an einer Druckseite (26) des Rotorblattes (10) angeordnet ist, wobei das Dämpfungssystem derart ausgebildet ist, dass bei einer Beschleunigung (52, 54) des Rotorblattes (10) entgegen einer Drehbewegung des Rotorblattes (10) um eine Nabe der Windenergieanlage mittels der Kontrollfläche (36, 36', 38) des Dämpfungssystems ein Auftriebsbeiwert des Rotorblattes (10) erhöht wird.

7. Rotorblatt (10) nach einem der vorangehenden Ansprüche, **dadurch gekennzeichnet, dass** das Rotorblatt (10) ein erstes Dämpfungssystem mit einer an einer Saugseite (28) des Rotorblattes angeordneten Kontrollfläche (36, 36', 38) und ein zweites Dämpfungssystem mit einer an einer Druckseite (26) des Rotorblattes angeordneten Kontrollfläche (36, 36', 38) aufweist.

8. Rotorblatt (10) nach einem der Ansprüche 1 bis 4, **dadurch gekennzeichnet, dass** das Dämpfungssystem derart ausgebildet ist, dass bei einer Beschleunigung (52, 54) des Rotorblattes (10) entlang einer Profilsehne (24) des Rotorblattes (10), insbesondere in Richtung zu einer Profilnase (20) hin, ein Widerstandsbeiwert des Rotorblattes (10) mittels der Kontrollfläche (36, 36', 38) des Dämpfungssystems erhöht wird.

9. Rotorblatt (10) nach einem der Ansprüche 1 bis 4, **dadurch gekennzeichnet, dass** die Kontrollfläche (36, 36', 38) des Dämpfungssystems an einer Hinterkante (22) des Rotorblattes (10) angeordnet ist, wobei das Dämpfungssystem derart ausgebildet ist, dass bei einer Beschleunigung (52, 54) des Rotorblattes (10) in Richtung einer Drehbewegung des Rotorblattes (10) um eine Nabe der Windenergieanlage mittels der Kontrollfläche (36, 36', 38) des Dämpfungssystems ein Auftriebsbeiwert des Rotorblattes (10) verringert wird und dass bei einer Beschleunigung (52, 54) des Rotorblattes (10) entgegen einer Drehbewegung des Rotorblattes (10) um eine Nabe der Windenergieanlage mittels der Kontrollfläche (36, 36', 38) des Dämpfungssystems ein Auftriebsbeiwert des Rotorblattes (10) erhöht wird.

10. Rotorblatt (10) nach Anspruch 9, **dadurch gekennzeichnet, dass** das Rotorblatt (10) eine, insbesondere flexible, Hinterkante (22) des Rotorblattes (10) aufweist, die als Kontrollfläche (36, 36', 38) des Dämpfungssystems ausgebildet ist.

## Claims

1. A rotor blade (10) for a wind energy installation, with a damping system comprising a control surface (36, 36', 38) integrated into the rotor blade (10) at an outer surface, for changing an aerodynamic property of the rotor blade, and an inertia mass (30, 30') connected to the control surface (36, 36', 38) so that the control surface (36, 36', 38) is deformed due to an inertia force acting on the inertia mass (30, 30') on the occurrence of an acceleration (52, 54) of the rotor blade (10), wherein the damping system comprises a tensioning device (48) for generating a specifiable tension for the control surface (36, 36' 38) and/or the inertia mass (30, 30') so that the control surface (36, 36', 38) is actuated only on the occurrence of an acceleration (52, 54) of the rotor blade which is greater than a minimum acceleration determined by means of the tension, wherein a notch (46) is worked into an outer fiber composite layer (44) of a rotor blade shell (40) of the rotor blade (10) so that the control surface (36, 36', 38) is constructed as an area or a portion of the outer fiber composite layer which area or portion is connected with the rotor blade shell (40) via a web (48), wherein the control surface (36, 36', 38) can be pivoted at the web (48) and the web (48) causes the tension, and wherein the inertia mass (30, 30') is connected to the control surface (36, 36', 38) via a lever (32, 32') which is rotatably supported at the rotor blade (10) and/or wherein the inertia mass (30, 30') is arranged in an inner cavity (16) of the rotor blade (10).

2. The rotor blade (10) according to claim 1, **characterized in that** the control surface (36, 36', 38) is constructed as a surface portion of variable shape of an outer surface of the rotor blade (10).

3. The rotor blade (10) according to claim 2, **characterized in that** the control surface (36, 36', 38) is constructed as a pivotable flap.

4. The rotor blade (10) according to any one of the preceding claims, **characterized in that** the damping system is arranged in the area of the rotor blade (10) which is distant from the hub, in particular in the third of the rotor blade (10) towards the tip.

5. The rotor blade according to any one of the preceding claims, **characterized in that** the control surface (36, 36', 38) of the damping system is arranged at a suction side (28) of the rotor blade (10), wherein the damping system is constructed in such a way that an uplift coefficient of the rotor blade (10) is reduced, by means of the control surface (36, 36', 38) of the damping system, on the occurrence of an acceleration (52, 54) of the rotor blade (10) in the direction of a rotational movement of the rotor blade (10) about a hub of the wind energy installation.

6. The rotor blade (10) according to any one of the claims 1 to 4, **characterized in that** the control surface (36, 36', 38) of the damping system is arranged at a pressure side (26) of the rotor blade (10), wherein the damping system is constructed in such a way that an uplift coefficient of the rotor blade (10) is increased, by means of the control surface (36, 36', 38) of the damping system, on the occurrence of an acceleration (52, 54) of the rotor blade (10) against the direction of a rotational movement of the rotor blade (10) about a hub of the wind energy installation.

7. The rotor blade (10) according to any one of the preceding claims, **characterized in that** the rotor blade (10) comprises a first damping system with a control surface (36, 36', 38) arranged at a suction side (28) of the rotor blade and a second damping system with a control surface (36, 36', 38) arranged at a pressure side (26) of the rotor blade.

8. The rotor blade (10) according to any one of the claims 1 to 4, **characterized in that** the damping system is constructed in such a way that a resistance coefficient of the rotor blade (10) is increased by means of the control surface (36, 36', 38) of the damping system on the occurrence of an acceleration (52, 54) of the rotor blade (10) along a profile chord (24) of the rotor blade (10), in particular in a direction towards a leading edge (20).

9. The rotor blade (10) according to any one of the claims 1 to 4, **characterized in that** the control surface (36, 36', 38) of the damping system is arranged at a trailing edge (22) of the rotor blade (10), wherein the damping system is constructed in such a way that an uplift coefficient of the rotor blade (10) is reduced by means of the control surface (36, 36', 38) of the damping system on the occurrence of an acceleration (52, 54) of the rotor blade (10) in the direction of a rotational movement of the rotor blade (10) about a hub of the wind energy installation, and that an uplift coefficient of the rotor blade (10) is increased by means of the control surface (36, 36', 38) of the damping system on the occurrence of an acceleration (52, 54) of the rotor blade (10) against the direction of a rotational movement of the rotor blade (10) about a hub of the wind energy installation.

10. The rotor blade (10) according to claim 9, **characterized in that** the rotor blade (10) comprises a trailing edge (22) of the rotor blade (10), in particular a flexible trailing edge (22) of the rotor blade (10), which trailing edge (22) is constructed as a control surface (36, 36', 38) of the damping system.

## Revendications

1. Pale de rotor (10) pour une éolienne avec un système d'amortissement comprenant une face de contrôle (36, 36', 38) intégrée au niveau d'une surface extérieure dans la pale de rotor (10), servant à modifier une propriété aérodynamique de la pale de rotor et une masse d'inertie (30, 30') reliée à la face de contrôle (36, 36', 38) de sorte que la face de contrôle (36, 36', 38) est déformée du fait d'une force d'inertie agissant sur la masse d'inertie (30, 30') lors d'une accélération (52, 54) de la pale de rotor (10), dans laquelle le système d'amortissement présente un dispositif de tension (48) servant à générer une précontrainte pouvant être spécifiée pour la face de contrôle (36, 36', 38) et/ou la masse d'inertie (30, 30'), de sorte que la face de contrôle (36, 36', 38) est actionnée seulement lors d'une accélération (52, 54) de la pale de rotor, qui est supérieure à une accélération minimale définie par la précontrainte, dans laquelle une entaille (46) est pratiquée dans une couche composite à base de fibres (44) extérieure d'une coque de pale de rotor (40) de la pale de rotor (10) de sorte que la face de contrôle (36, 36', 38) est réalisée sous la forme d'une zone ou d'une partie de la couche composite à base de fibres extérieure, qui est reliée par l'intermédiaire d'une entretoise (48) à la coque de pale de rotor (40), dans laquelle la face de contrôle (36, 36', 38) peut être pivotée au niveau de l'entretoise (48) et l'entretoise (48) entraîne la précontrainte, et dans laquelle la masse d'inertie (30, 30') est reliée par l'intermédiaire d'un levier (32, 32') monté de manière à pouvoir tourner au niveau de la pale de rotor (10) à la face de contrôle (36, 36', 38) et/ou est disposée dans un espace creux intérieur (16) de la pale de rotor (10).

2. Pale de rotor (10) selon la revendication 1, **caractérisée en ce que** la face de contrôle (36, 36', 38) est réalisée sous la forme d'une section de face à forme variable d'une surface extérieure de la pale de rotor (10) .

3. Pale de rotor (10) selon la revendication 2, **caractérisée en ce que** la face de contrôle (36, 36', 38) est réalisée sous la forme d'un clapet pouvant pivoter.

4. Pale de rotor (10) selon l'une quelconque des revendications précédentes, **caractérisée en ce que** le système d'amortissement est disposé dans une zone, éloignée du moyeu, de la pale de rotor (10), en particulier dans le tiers, côté pointe, de la pale de rotor (10).

5. Pale de rotor selon l'une quelconque des revendications précédentes, **caractérisée en ce que** la face de contrôle (36, 36', 38) du système d'amortissement est disposée au niveau d'un côté aspiration (28) de la pale de rotor (10), dans laquelle le système d'amortissement est réalisé de telle manière que lors d'une accélération (52, 54) de la pale de rotor (10) en direction d'un déplacement de rotation de la pale de rotor (10) autour d'un moyeu de l'éolienne, un coefficient de portance de la pale de rotor (10) est réduit au moyen de la face de contrôle (36, 36', 38) du système d'amortissement.

6. Pale de rotor (10) selon l'une quelconque des revendications 1 à 4, **caractérisée en ce que** la face de contrôle (36, 36', 38) du système d'amortissement est disposée au niveau d'un côté pression (26) de la pale de rotor (10), dans laquelle le système d'amortissement est réalisé de telle manière que dans le cas d'une accélération (52, 54) de la pale de rotor (10) dans le sens opposé à un déplacement de rotation de la pale de rotor (10) autour d'un moyeu de l'éolienne, un coefficient de portance de la pale de rotor (10) est augmenté au moyen de la face de contrôle (36, 36', 38) du système d'amortissement.

7. Pale de rotor (10) selon l'une quelconque des revendications précédentes, **caractérisée en ce que** la pale de rotor (10) présente un premier système d'amortissement avec une face de contrôle (36, 36', 38) disposée au niveau d'un côté aspiration (28) de la pale de rotor et un deuxième système d'amortissement avec une face de contrôle (36, 36', 38) disposée au niveau d'un côté pression (26) de la pale de rotor.

8. Pale de rotor (10) selon l'une quelconque des revendications 1 à 4, **caractérisée en ce que** le système d'amortissement est réalisé de telle manière que lors d'une accélération (52, 54) de la pale de rotor (10) le long d'une corde de profil aérodynamique (24) de la pale de rotor (10), en particulier en direction d'un ergot profilé (20), un coefficient de résistance de la pale de rotor (10) est augmenté au moyen de la face de contrôle (36, 36', 38) du système d'amortissement.

9. Pale de rotor (10) selon l'une quelconque des revendications 1 à 4,
**caractérisée en ce que**
la face de contrôle (36, 36', 38) du système d'amortissement est disposée au niveau d'un bord de fuite (22) de la pale de rotor (10), dans laquelle le système d'amortissement est réalisé de telle manière que lors d'une accélération (52, 54) de la pale de rotor (10) en direction d'un déplacement de rotation de la pale de rotor (10) autour d'un moyeu de l'éolienne, un coefficient de portance de la pale de rotor (10) est réduit au moyen de la face de contrôle (36, 36', 38) du système d'amortissement, et que lors d'une accélération (52, 54) de la pale de rotor (10) dans le sens opposé à un déplacement de rotation de la pale de rotor (10) autour d'un moyeu de l'éolienne, un coefficient de portance de la pale de rotor (10) est augmenté au moyen de la face de contrôle (36, 36', 38) du système d'amortissement.

10. Pale de rotor (10) selon la revendication 9, **caractérisée en ce que** la pale de rotor (10) présente un bord de fuite (22) en particulier flexible de la pale de rotor (10), qui est réalisé sous la forme d'une face de contrôle (36, 36', 38) du système d'amortissement.
